(19)

Europäisches
Patentamt
European
Patent Office
Office européen
des brevets

(11)  **EP 2 950 226 A1**

(12)  **EUROPEAN PATENT APPLICATION**

(43) Date of publication:
    **02.12.2015 Bulletin 2015/49**

(51) Int Cl.:
    *G06F 17/30* (2006.01)

(21) Application number: **15159110.4**

(22) Date of filing: **13.03.2015**

(84) Designated Contracting States:
    **AL AT BE BG CH CY CZ DE DK EE ES FI FR GB**
    **GR HR HU IE IS IT LI LT LU LV MC MK MT NL NO**
    **PL PT RO RS SE SI SK SM TR**
    Designated Extension States:
    **BA ME**
    Designated Validation States:
    **MA**

(30) Priority: **30.05.2014 US 201414292703**

(71) Applicant: **Linkedin Corporation**
    **Mountain View, California 94043 (US)**

(72) Inventors:
    • **Xiao, Fei**
      **San Jose, CA 95129 (US)**
    • **Sinha, Shakti Dhirendraji**
      **Sunnyvale, CA 94089 (US)**
    • **Kanduri, Satya Pradeep**
      **Mountain View, CA 94040 (US)**
    • **Dommeti, Ramesh**
      **San Jose, CA 95129 (US)**

(74) Representative: **Collins, John David**
    **JCIP Limited**
    **Hillington Park Innovation Centre**
    **1 Ainslie Road**
    **Glasgow G52 4RU (GB)**

(54)  **NEW HEURISTIC FOR OPTIMIZING NON-CONVEX FUNCTION FOR LEARNING TO RANK**

(57)  Techniques for optimizing non-convex function for learning to rank are described. Consistent with some embodiments, a search module may set an order for a group of search features. The group of search features can be used by a ranking model to determine the relevance of items in a search query. Additionally, the search module can assign a first weight factor to a first search feature in the group of search features. Moreover, the search module can calculate a mean reciprocal rank for the search query based on the assigned first weight factor. Furthermore, the search module can determine a second weight factor, using a preset incremental vector, for a second search feature in the group of search features to maximize the mean reciprocal rank for the search query. Subsequently, the search module can assign the second weight factor to the second search feature in the group of search features.

*FIG. 3*

**EP 2 950 226 A1**

**Description**

TECHNICAL FIELD

The subject matter disclosed herein generally relates to the processing of data. Specifically, the present disclosure generally relates to techniques for training a model in a ranking task. Furthermore, the present disclosure relates to methods, systems and computer program products for enabling machine learning techniques for optimizing the ranking of search results in a search query.

BACKGROUND

Learning to rank refers to machine learning techniques for training a ranking model in a ranking task. A ranking task can include a search request (e.g., name search), information retrieval, natural language processing, and data mining.
Additionally, the ranking model can be trained to apply machine learning for ranking the search results. For example, learning to rank can apply machine learning in the construction of ranking models for search results of a search query.
A search result can include a list of items with some order specified between items in each list. This order can be based on the ranking model. The ranking model determines relevant items based on an algorithm. An algorithm computes a relevance of items in a search query using search features. Search features can be used and modified by the ranking models via the search algorithms to determine the relevance of items in a search query.

BRIEF DESCRIPTION OF THE DRAWINGS

Some embodiments are illustrated by way of example and not limitation in the figures of the accompanying drawings.

FIG. 1 is a network diagram illustrating a network environment suitable for a social network, according to some example embodiments.

FIG. 2 a block diagram illustrating various modules of a social network service, according to some embodiments.

FIG. 3 is a flowchart illustrating a searching algorithm, according to some example embodiments.

FIG. 4-6 are flowcharts illustrating operations of a search module in performing a method of 300, according to some example embodiments.

FIG. 7 is a block diagram illustrating components of a machine, according to some example embodiments, able to read instructions from a machine-readable medium and perform any one or more of the methodologies discussed herein.

DETAILED DESCRIPTION

Example methods and systems are directed to techniques for improving search results by training a ranking model using search features. More specifically, the present disclosure relates to methods, systems and computer program products for machine learning techniques using search features for optimizing ranking search results of a search query.
Some embodiments can use search features associated with social network services to optimize the ranking of a search result. Using machine learning techniques, the weight factor of each search feature can be determined to return a more user-specific search result.
Examples merely demonstrate possible variations. Unless explicitly stated otherwise, components and functions are optional and may be combined or subdivided, and operations may vary in sequence or be combined or subdivided. In the following description, for purposes of explanation, numerous specific details are set forth to provide a thorough understanding of example embodiments. It will be evident to one skilled in the art, however, that the present subject matter may be practiced without these specific details.

**Learning to Rank**

As previously mentioned, learning to rank can be employed in a wide variety of applications such as information retrieval, language processing, and data mining. Typical applications include document retrieval, web search, definition search, collaborative filtering, question answering, key-phrase extraction, document summarization, and machine translation.

In a web search example, machine learning techniques can construct a ranking model based on search features. Additionally, a large amount of search log data (e.g., click through data) can be accumulated as training data. Training data can be derived from the search log data for more accurate determination of weight factors. Accordingly, search log data (e.g., click through data, PageRank score) can be used as training data to determine the relevance of each search feature. Furthermore, using the training data, machine learning techniques can incorporate weight factors for each search features into the ranking model in order to construct the ranking model.

**Logistic Regression for Ranking for Name Search**

Current implementations for a search request, such as a name search, can use logistic regression with $L_2$ regularization to prevent over-fitting for the training data. $L_2$ regularization methods can be used for model selection, in particular to prevent over-fitting by adjusting to models with extreme parameter values. $L_2$ regularization can be added to learning algorithms to minimize a loss function, such as E(X, Y), by minimizing $E(X, Y) + \alpha|w|$. The w is the model's weight vector, the $|\cdot|$ is the squared $L_2$ norm, and a is a free parameter that can be tuned empirically (e.g., by cross-validation). When applied in linear regression, $L_2$ regularization may also be called weight decay.

Logistic regression can model the conditional probability as: $P_w(y = \pm|x) \equiv \frac{1}{1+e^{-yw^Tx}}$ , where x and w are vectors.

Additionally, given two-class training data (e.g., $\{x_i, y_i\}_{i=1}$; $x_i \in R^n$; and $y_i \in \{1,-1\}$), the traditional loss function of a logistic regression with $L_2$ regularization, is $P^{LR}(w) = C \sum_{i=1}^{l} \log\left(1 + e^{-y_i w^T x_i}\right) + \frac{1}{2}w^T w.$

Furthermore, the traditional loss function of a logistic regression with $L_2$ regularization is a convex function. A convex function, which is further described below, may have multiple local minimums and one actual minimum. Therefore, because of multiple local minimums, conventional optimization technique may wrongly determine that a local minimum is the optimal solution.

**Convex Function**

As background, a real-valued function f(x) defined on an interval is considered convex if the line segment between any two points on the graph of the function lies above the graph, in a vector space of at least two dimensions. For example, a well-known convex function is the quadratic function $f(x) = x^2$ for any real number x.

Specifically, convex functions can be especially important in the study of optimization problems where they are distinguished by a number of convenient properties. As previously mentioned, a convex function on an open set may have multiple local minimums, and one actual minimum, which represent the optimal solution. Therefore, because of multiple local minimums, conventional optimization techniques may wrongly determine that a local minimum is the optimal solution.

Accordingly, gradient descent techniques, which are further described herein, can be used to find the actual minimum of a convex function by ruling out local minimums. Based on the determination that the actual minimum of a convex function is the correct optimal solution, the gradient descent techniques allow for an accurate determination of the optimal solution.

**Gradient Descent**

As background, gradient descent is a first-order optimization algorithm. To find a local minimum of a function using gradient descent, a learning algorithm can take steps proportional to the negative of the gradient (or of the approximate gradient) of the function at the current point.

Gradient descent is based on the observation that if f(x) is defined and differentiable in a region of a point A, then f(x) decreases fastest if one goes from A in the direction of negative gradient of f at A. It follows that, if

$$b = a - \gamma \nabla f(A) \text{ for } \gamma \text{ is small enough, then } f(A) \geq f(B).$$

With this observation in mind, one starts with a guess xo for a local minimum of f, and considers the sequence x0, x1, x2... such that

$$x_{n+1} = x_n - \gamma_n \nabla f(x_n), n \geq 0.$$

The two above equations can generate $f(x_1) \geq f(x_2) \geq f(x_3)$, and so on, which can result in the sequence $x_n$ converging to the desired local minimum. Additionally, when the function f(x) is convex, all local minima are also global minima. Therefore for convex functions, gradient descent can converge to the global solution. However, in a non-convex function, such a name search, gradient descent techniques may not converge to the global solution.

**Mean Reciprocal Rank (MRR)**

Accordingly, for learning to rank, classic loss function, such as gradient descent techniques, may not be the best to represent the ranking problem. Specifically, it can be a difficult problem to optimize non-convex function in machine learning as traditional algorithms may be trapped to local minimum. Therefore, the performance or ranking algorithms can be measured by the MRR metric to improve the performance of our learning to rank model. MRR is a non-convex function, which is decided by the ranking of the right result.

To illustrate, in training of the logistic regression, a search result that is clicked can simply mean it is relatively the most relevant compared to other results in the same search. This may not imply actual probability for the correct result to be clicked when the search features are known. Therefore, in order to better represent the ranking problem, some embodiments can instead use the mean reciprocal rank (MRR) as loss function.

Using MRR in a name search example, searchers are looking for a single specific person. Embodiments of the present invention can use a set of search features to determine each search result. Additionally, some embodiments can estimate the probability for a result to be clicked with logistic regression.

**Optimize MRR for Name Search**

MRR is an important metric in evaluating the ranking result in a name search. MRR can be a metric used to judge the effectiveness of an algorithm and to compare performance of different machine-learned ranking algorithms. Accordingly, in some instances, a learning to rank problem can be reformulated as an optimization problem with respect to MRR or other similar metrics.

As background, MRR is a statistic measure for evaluating any process that produces a list of possible responses, with the list, to a sample of queries, ordered by probability of correctness. The reciprocal rank of a query response is the multiplicative inverse of the rank of the first correct answer. The mean reciprocal rank is the average of the reciprocal ranks of results for a sample of queries

$$Q: MRR = \frac{1}{|Q|} \sum_{i=1}^{|Q|} \left( \frac{1}{rank_i} \right).$$

The system achieves optimal ranking for all the searches when MRR is equal to 1.0. Additionally, given that the MRR depends on the order of the results, some embodiments can optimize the non-convex function using MRR to determine the relevance of the search results. Furthermore, MRR is calculated according to the ranking of the clicked results, which is non-convex and non-differentiable.

As previously mentioned, in current implementations traditional algorithms, like gradient descent, in current implementations may be trapped into local optimal solutions. An example of an error surface of a non-convex function is a Rastrigin function. In mathematical optimization, the Rastrigin function is a non-convex function used as a performance test problem for optimization algorithms. The Rastrigin function is a typical example of non-linear multimodal function. Finding the minimum of the Rastrigin function can be a fairly difficult problem due to its large search space and its large number of local minima.

Accordingly, some current implementations use coordinated ascent to optimize non-convex metrics such as Normalized Discounted Cumulative Gain (NDCG). However, NDCG can be different in comparison to the key features in the iterative search in the embodiments described herein.

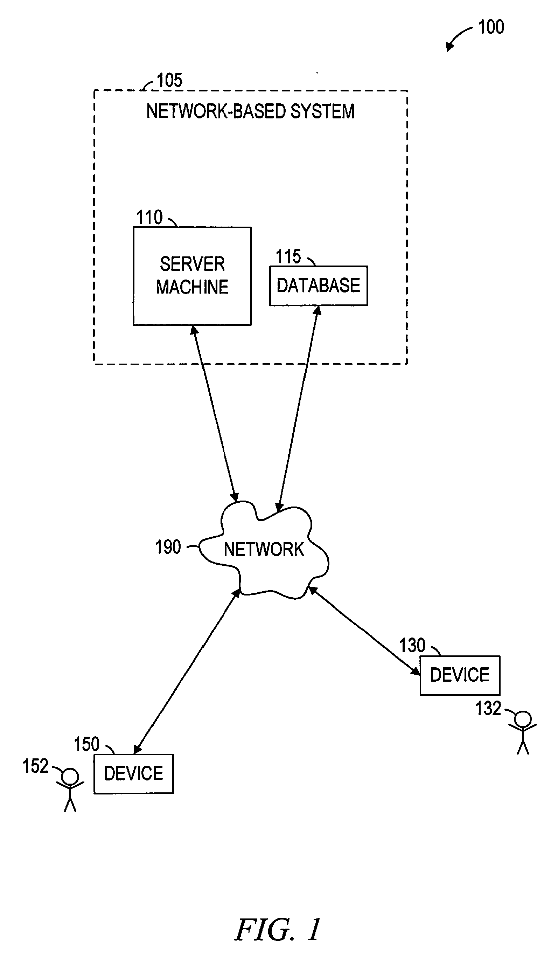

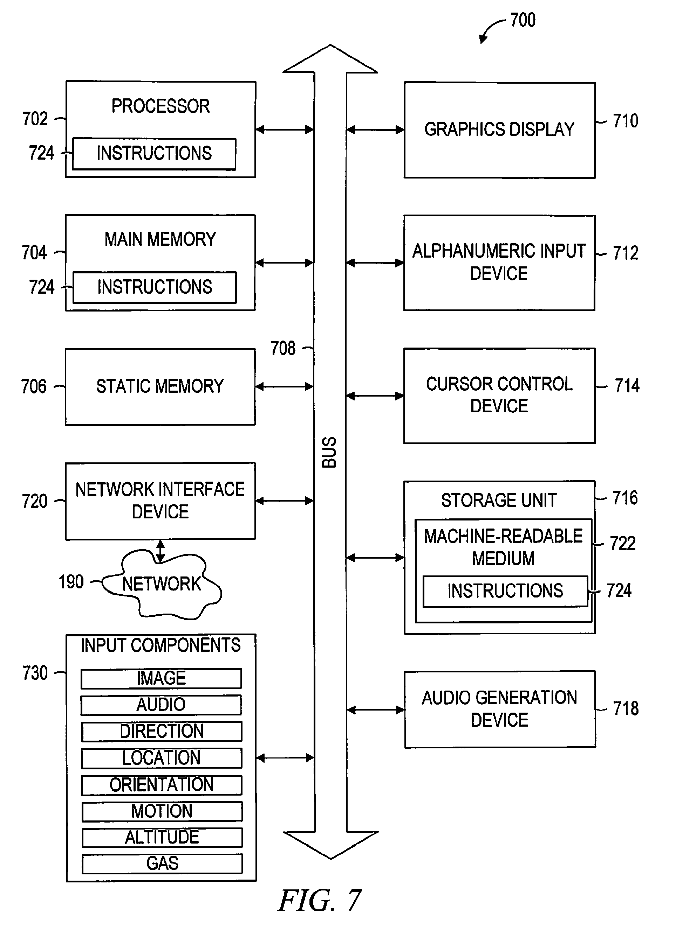

FIG. 1 is a network diagram illustrating a network environment 100 suitable for social network service, according to some example embodiments. The network environment 100 includes a server machine 110, a database 115, a first device 130 for a first user 132, and a second device 150 for a second user 152, all communicatively coupled to each other via a network 190. The server machine 110 may form all or part of a network-based system 105 (e.g., a cloud-based server system configured to provide one or more services to the devices 130 and 150). The database 115 can store search features (e.g., profile data, social graph data) for the social network service. The server machine 110, the first device 130 and the second device 150 may each be implemented in a computer system, in whole or in part, as described below with respect to FIG. 7.

Also shown in FIG. 1 are users 132 and 152. One or both of the users 132 and 152 may be a human user (e.g., a human being), a machine user (e.g., a computer configured by a software program to interact with the device 130), or any suitable combination thereof (e.g., a human assisted by a machine or a machine supervised by a human). The user 132 is not part of the network environment 100, but is associated with the device 130 and may be a user of the device 130. For example, the device 130 may be a desktop computer, a vehicle computer, a tablet computer, a navigational device, a portable media device, a smartphone, or a wearable device (e.g., a smart watch or smart glasses) belonging to the user 132. Likewise, the user 152 is not part of the network environment 100, but is associated with the device 150. As an example, the device 150 may be a desktop computer, a vehicle computer, a tablet computer, a navigational device, a portable media device, a smartphone, or a wearable device (e.g., a smart watch or smart glasses) belonging to the user 152.

Any of the machines, databases, or devices shown in FIG. 1 may be implemented in a general-purpose computer modified (e.g., configured or programmed) by software (e.g., one or more software modules) to be a special-purpose computer to perform one or more of the functions described herein for that machine, database, or device. For example, a computer system able to implement any one or more of the methodologies described herein is discussed below with respect to FIG. 7. As used herein, a "database" is a data storage resource and may store data structured as a text file, a table, a spreadsheet, a relational database (e.g., an object-relational database), a triple store, a hierarchical data store, or any suitable combination thereof. Moreover, any two or more of the machines, databases, or devices illustrated in FIG. 1 may be combined into a single machine, and the functions described herein for any single machine, database, or device may be subdivided among multiple machines, databases, or devices.

The network 190 may be any network that enables communication between or among machines, databases, and devices (e.g., the server machine 110 and the device 130). Accordingly, the network 190 may be a wired network, a wireless network (e.g., a mobile or cellular network), or any suitable combination thereof. The network 190 may include one or more portions that constitute a private network, a public network (e.g., the Internet), or any suitable combination thereof. Accordingly, the network 190 may include one or more portions that incorporate a local area network (LAN), a wide area network (WAN), the Internet, a mobile telephone network (e.g., a cellular network), a wired telephone network (e.g., a plain old telephone system (POTS) network), a wireless data network (e.g., WiFi network or WiMax network), or any suitable combination thereof. Any one or more portions of the network 190 may communicate information via a transmission medium. As used herein, "transmission medium" refers to any intangible (e.g., transitory) medium that is capable of communicating (e.g., transmitting) instructions for execution by a machine (e.g., by one or more processors of such a machine), and includes digital or analog communication signals or other intangible media to facilitate communication of such software.

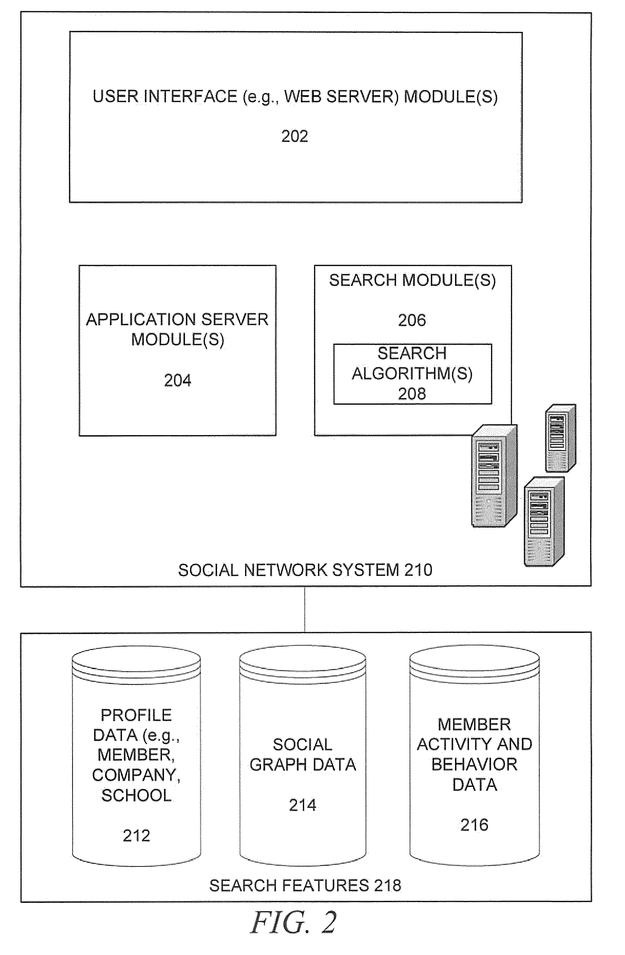

FIG. 2 is a block diagram illustrating components of a social network system 210 according to some example embodiments. The social network system 210 is an example of a network-based system 105 of FIG. 1. The social network system 210 can include a user interface 202, application server module(s) 204, and search module(s) 206 , all configured to communicate with each other (e.g., via a bus, shared memory, a switch). The search module(s) 206 can further include a database with search algorithms 208. Furthermore, the social network system 210 can communicate with database 115 of FIG. 1, such as a database storing search features 218. The search features 218 can include profile data 212, social graph data 214, and member activity and behavior data 216.

Any one or more of the modules described herein may be implemented using hardware (e.g., one or more processors of a machine) or a combination of hardware and software. For example, any module described herein may configure a processor (e.g., among one or more processors of a machine) to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

In FIG. 2, the front end consists of a user interface module (e.g., a web server) 202, which receives requests (e.g., search requests) via network 190 from various client-computing devices (e.g., devices 130 and 150), and communicates appropriate responses to the requesting client devices. For example, the user interface module(s) 202 may receive search requests (e.g., name search requests) in the form of Hypertext Transport Protocol (HTTP) requests, or other web-based, application programming interface (API) requests. The application logic layer includes various application server module(s) 204, which, in conjunction with the user interface module(s) 202, generates various user interfaces (e.g., web pages) with data retrieved (e.g., search results) from various data sources in the data layer. With some embodiments, individual application server modules 204 are used to implement the functionality associated with various services and features of the social network service.

The search module 206 in conjunction with the user interface 202 and the application server module(s) 204 can present search results based on search algorithm(s) 208. Search algorithm(s) 208 can include machine learning techniques. For example, a searcher can request a name search. Continuing with the example, the search module 206 can use search algorithm(s) 208 to present name of users in the social network system 201 that are relevant to the searcher based on search features 218 that are specific to the searcher.

As shown in FIG. 2, the data layer includes several databases, such as a database for search features 218 for storing profile data 212, including both member profile data as well as profile data for various organizations. Additionally, the database for search features 218 can store social graph data 214 and member activity and behavior data 216.

**Search Features**

Some embodiments can use search features which may be specific to the searcher in order to present more relevant search results.

Profile data 212 can be used as search features in the search algorithms. For instance, with many social network services, when a user registers to become a member, the member is prompted to provide a variety of personal or biographical information that may be displayed in a member's personal web page. Such information is commonly referred to as profile data 212. The profile data 212 that is commonly requested and displayed as part of a member's profile includes a person's age, birthdate, gender, interests, contact information, residential address, home town and/or state, the name of the person's spouse and/or family members, educational background (e.g., schools, majors, matriculation and/or graduation dates, etc.), employment history, skills, professional organizations, and so on. In some instances, profile data can include company size, industry, function, seniority, skills, and geography.

With some embodiments, search features may include the various skills that each member has indicated he or she possesses in the profile data 212. Similarly, with some embodiments, search features may include skills for which a member has been endorsed in the profile data 212. By selecting various combinations of features, search module 206 can optimize the search results. In various other embodiments, any number and different combinations of other targeting criteria are possible and within the scope of the present inventive subject matter.

The profile data 212 can be stored, for example, as search features 218. Similarly, when a representative of an organization initially registers the organization with the social network service, the representative may be prompted to provide certain information about the organization which can be used as search features. This information may be stored, for example, in the database 115.

With some embodiments, the personalized data to be used as search features may be processed (e.g., in the background or offline) to generate various derived profile data 212. For example, if a member has provided information about various job titles the member has held with the same or different companies, and for how long, this information can be used to infer or derive a member profile attribute indicating the member's overall seniority level, or seniority level within a particular company. Additionally, the search features based on this personalized data can be used to return more relevant search results. With some embodiments, importing or otherwise accessing data from one or more externally hosted data sources may enhance profile data for both members and organizations. For instance, with companies in particular, financial data may be imported from one or more external data sources, and made part of a company's profile.

In some other embodiments, with certain social network services, such as some business or professional network services, profile data 212 may include information commonly included in a professional resume or curriculum vitae, such as information about a person's education, the company at which a person is employed, an industry in which a person is employed, a job title or function, an employment history, skills possessed by a person, professional organizations of which a person is a member, and so on.

Additionally, social network services provide their users with a mechanism for defining their relationships with other people. This digital representation of real-world relationships is frequently referred to as a social graph data 214. Accordingly, in some embodiments, the search algorithm(s) 208 can use the social graph data 214 as search features for ranking the search results.

In some instances, social graph data 214 can be based on an organization's presence within the social network service. For example, consistent with some embodiments, a social graph is implemented with a specialized graph data structure in which various entities (e.g., people, companies, schools, government institutions, non-profits, and other organizations) are represented as nodes connected by edges, where the edges have different types representing the various associations and/or relationships between the different entities.

Accordingly, if a member of the social network service with the name John Smith graduated from University, this particular association would be represented in the social graph data structure by a node representing the member, Jeffrey, being connected via an edge to another node representing the entity or organization, University, where the particular edge type indicates the specific type of association - in this case, John's status as a graduate of University. Consequently, at least with some embodiments, an organization may have a presence within a social graph of a social network service without necessarily having any particular web-based content that is hosted by the social network service. Using this example of associating a user's organization as a feature, when the user John Smith is searching for another person, the search result may determine that names that match the search result and that graduated from University should be ranked higher in the search algorithm based on this search feature.

Furthermore, the social graph data 214 that is maintained by a third-party social network service. For example, users can indicate a relationship or association with a variety of real-world entities and/or objects. Typically, a user input is captured when a user interacts with a particular graphical user interface element, such as a button, which is generally presented in connection with the particular entity or object and frequently labelled in some meaningful way (e.g., "like," "+1," "follow").

For example, when a user searches for another person on a social network service, the user can input the first name and/or last name of the other person. Using search features, the social services can present search results that are more relevant to the user in order for the user to find the specific person for whom the user was searching.

Once registered, a member may invite other members, or be invited by other members, to connect via the social network service. A "connection" may require a bi-lateral agreement by the members, such that both members acknowledge the establishment of the connection. According to some embodiments, connection relationship data can be another search feature to be used in a search query.

Similarly, with some embodiments, a member may elect to "follow" another member. In contrast to establishing a connection, the concept of "following" another member typically is a unilateral operation, and at least with some embodiments, does not require acknowledgement or approval by the member being followed. When one member follows another, the member who is following may receive status updates or other messages published by the member being followed, or relating to various activities undertaken by the member being followed. According to some embodiments, follow data can be another search feature in a search query. For example, a search result may find a person more relevant to the searcher, if the person follows similar entities.

In any case, the various associations and relationships that the members establish with other members, or with other entities and objects, are stored and maintained within the social graph data 214.

In addition to hosting a vast amount of social graph data 214, many social network services maintain member activity and behavior data 216 which can also be used as search features.

The social network service may provide a broad range of other applications and services that allow members the opportunity to share and receive information, often customized to the interests of the member. With some embodiments, members may be able to self-organize into groups, or interest groups, organized around a subject matter or topic of interest. With some embodiments, the social network service may host various job listings providing details of job openings with various organizations.

Furthermore, as members interact with the various applications, services and content made available via the social network service, the members' behavior (e.g., content viewed, links selected, etc.) may be used to tailor search results specific to the user. In some embodiments, search features can be based on the member activity and behavior data 216.

Online or web-based social network services can use profile data 212 , social graph data 214 and member activity and behavior data 216 as search features 218 to provide more accurate search results. Accordingly, embodiments of the present invention can provide search results based on the search features. By tailoring the search results based on the search features, the social network services can present search results that are more relevant to the specific user.

Based on these search features, the search results can be more relevant to the user. For example, when the search is a first and/or last name search, by using personalized data as search features, the search results can be more relevant to the user (e.g., the actual "John Smith" being search is returned in the search result).

Although not shown, with some embodiments, the social network system 210 provides an application programming interface (API) module via which third-party applications can access various services and data provided by the social network service. For example, using an API, a third-party application may provide a user interface and logic that enables an authorized representative of an organization to publish messages from a third-party application to various content streams maintained by the social network service. Such third-party applications may be browser-based applications, or may be operating system-specific. In particular, some third-party applications may reside and execute on one or more mobile devices (e.g., phone, or tablet computing devices) having a mobile operating system.

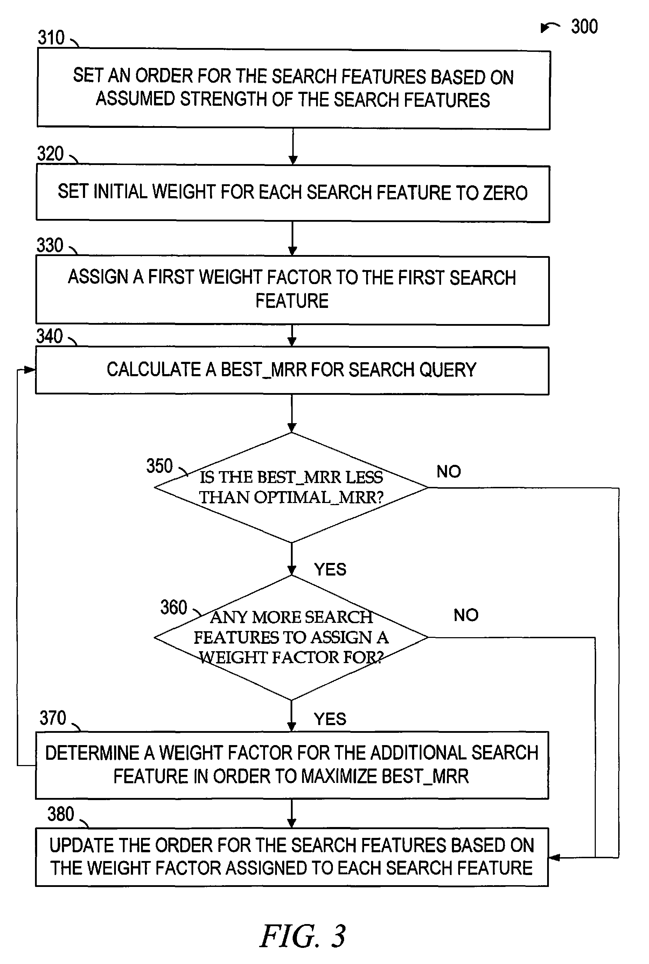

FIG. 3 is a flowchart illustrating operations of search module 206 in performing a method 300 of optimizing search results, according to some example embodiments. Operations in the method 300 may be performed by network-based system 105, using modules described above with respect to FIG. 2. As shown in FIG. 3, the method 300 includes operations 310, 320, 330, 340, 350, 360, 370 and 380.

As previously mentioned, for learning to rank, classic loss function may not be the best to represent the ranking problem because of not presenting the global optimal solution. As we measure the performance or ranking algorithms by metrics like MRR, to use the metrics as MRR as loss function may improve the performance of our learning to rank model. However, MRR is a non-convex function, which is decided by the ranking of the right result. It can be a difficult problem to optimize non-convex function in machine learning as traditional algorithms may be trapped to local minimum.

According to some embodiments, three assumptions can be considered when designing an algorithm to optimize non-convex loss function.

The first assumption is that the search space for all the parameters (e.g., feature vectors) can be fairly large. For example, for 50 parameters, even assuming we try five values from [1, 1] for each parameter, the number of potential variation will be it will be 5^50 (8.88E34). Therefore based on the first assumption, it may be impossible to design a brute force algorithm. Additionally, because of the large search space, a Monte Carlo algorithm may not work well either.

The second assumption is that when a high weight factor is assigned to a non-significant parameter, the data results may result in over fitting. Accordingly, the algorithm should be designed to focus on assigning the right weight for the most relevant (e.g., powerful) features first.

The third assumption is that when each parameter is considered individually, presenting for each parameter alone increases the relevance. The relevance can be measured in the probability that the search item is clicked by the user. Therefore, based on the third assumption, most parameters will tend to have positive weight instead of a negative weight. Accordingly the algorithm via the incremental array can be designed to try positive weight factors for each search features more aggressively than negative weight factors.

Based on these assumptions, the algorithm can be designed the iterative algorithm as described below in order to optimize MRR, which can outperform current implementations of name search models that are based on logistic regression. For example, some embodiments of the present invention are about eight times faster than current implementations of coordinate descent techniques. Coordinate descent algorithms have functions based on $O(n^2)$, while embodiments of the present invention can have algorithms with functions based $O(kn)$

One embodiment of the present invention can adjust feature weights in the order of the feature strength and/or relevance. According to some embodiments, when a first feature weight is determined, the first feature weight will not change, when we determine the second feature weight, and so on. Furthermore, after all the weights of the features are selected, the system can order the features again according their weight and the process will be iterated again.

Details about the new heuristic for optimizing MRR are presented herein. As previously mentioned, according to the second assumption, assigning high weight factor to non-significant features may result in over fitting. Additionally, according to the third assumption, considering the features individually, each feature alone will increase the relevance (e.g., probability to be clicked, which could be measured). Therefore, most features tend to have a positive weight instead of a negative weight.

According to embodiments of the present invention, the system can assign weight for the most important features first (order the features according to their weight) and assign a positive weight for features or a much smaller negative weight to prevent over fitting.

Referring back to FIG. 3, and in accordance to some embodiments, operations for optimizing non-convex function for learning to rank are described below.

At operation 310, search module 206 can set an order for the search features based on the assumed strength of the search features. The assumed strength can be based on human evaluation or strength derived from data.

At operation 320, search module 206 can set an initial weight for each search feature to zero.

At operation 330, search module 206 can assign a first weight factor to the first search feature.

At operation 340, search module 206 can calculate a Best_MRR for the search query.

At operation 350, search module 206 determines if the calculated Best_MRR is less than the Optimal_MRR. The Optimal_MRR is the MRR for the global optimal solution. For example, a search query with three search instances, such as the search query in method 400, the Optimal_MRR is 3.0 (i.e., 3 search instances times 1.0) Returning back to operation 350, if the Best_MRR is equal to the Optimal_MRR, then the process of assigning weight factors for each search feature can go to operation 380.

Alternatively, if the Best_MRR is less than the Optimal_MRR, search module 206 then determines at operation 360 if additional search features are available to be assigned a weight factor. If additional search features are available, then the process continues to operation 370. Alternatively, if all the search features have been assigned a weight factor, then the process is complete and can go to operation 380. For example, this can occur when the process has assigned a weight factor for each search feature and the Best_MRR is still less than the Optimal_MRR.

Search module 206, can set an order for a group search features where the weight of the features will be tuned one by one according to the order. The weight of each search feature will be tuned incrementally according to a preset incremental vector. When tuning each feature, search module 206 can keep the weight which maximizes the mean reciprocal rank. After all the features have been tuned (i.e., weight of all the features have been set, the features are reordered according to their weight. As noted, higher weight means higher strength of the feature.

Furthermore, the weight of the feature can be determined one by one in order to maximize the mean reciprocal rank for the search query. In some instances, after all of the weights of the features have been determined, search module can update the order of the features when all the weight of the features have been tuned one by one. For each iteration (e.g., iter < k) of the algorithm, the new order will be set according to the weight assigned in previous iteration.

Moreover, when determining a weight factor (e.g., tuning a feature), search module 206 can select a weight incremental amount from weight incremental array one by one. Search module 206 can increase the weight of the current feature by the weight incremental amount. If the better MRR is achieved by the new weight, search module 206 keeps increasing the weight by the weight incremental amount, otherwise search module 206 try the next weight incremental amount in the weight incremental array. Weight incremental array can be preset and can be changed according to user's preference for training speed and results.

Now continuing with operation 370, search module 206 can take the next search feature (which was assigned a weight factor of zero at operation 320) and determine a weight factor, using a preset incremental vector, in order to maximize the Best_MRR. Method 400 goes in further detail in the process for maximizing the MRR.

After operation 370, the process iterates back to operation 340, where the Best_MRR is calculated again. Operations 340 and 370 continue iteratively in a loop until a triggering even occurs at 350 or 360 which cause the process to go to operation 380.

In some instances, the determination of the weight factor for the search feature can comprises of selecting a weight factor from a list of weight factors in an incremental array, wherein the incremental array is used to change the weight factor incrementally.

For example, when the incremental array is {1.0, 0.5, 0.25, 0.125, 0.0625, 0.03125, 0.015625, -0.015625}, search module 206 will try to increase the weight by +1.0, +0.5, +0.25, +0.125, +0.0625, +0.03125, +0.015625 repeatedly, only after that it try to decrease weight by -0.015625.

As shown in the above example, the predetermined array is an incremental array T. The incremental array T is used to change the weight incrementally. As an example, $T[0] = 1.0$, will try to increase the weight by 1.0 each time and to see if better MRR can be achieved.

Furthermore, search module 206 can try to find the best weight for each feature in sequence of the importance of the features in multiple iterations, where the importance of the features is decided by the weight found in the previous iteration.

With this techniques, embodiments of the present invention reduce the effect of over fitting (e.g., remove a big negative weight feature). With this technique, the weight factor also served as an estimation for the importance of the feature. Therefore, search module 206 can rank the search features according to the weight and re-adjust their weight in the second round.

Now returning back to method 300, after a weight factor has been determined and assigned to the next search feature at operations 370, search module 206 can update the order for the search features based on the weight assigned to each search feature at operation 380. For example, the search features can be ordered from largest positive weight factor to smallest positive weight factor. Additionally, in this example, if any search features have a negative weight, these search features will be ordered after the smallest positive weight factors, but before the search features that have yet to be assigned a weight factor (i.e., by default weight factor is zero).

Optionally, method 300 can be repeated for k iterations. Method 300 can be repeated again for k iterations to tuning each feature one by one according to the new order. The constant k can be determined by user, and relates to how accurate the user wants the search to be. A higher k corresponds to a more accurate search but results in more computational power and more computation time. The process can be repeating for k iterations or the process, where an optimal or near optimal MRR may be achieved. A high k can mean a more accurate search result, but can require more computational power and time.

To further explain method 300, a simplified example with three search instances, each search having two results, is described below. As previously mentioned, the Optimal_MRR for three search instances is 3.0. Based on having three features, f1, f2, f3, the feature vector can be given as follows: [f1, f2, f3].

For the simplified example, here are the results of the three search instances:

| First Search Instance | Result | User Click? |
|---|---|---|
| First Result | [1, 0, 0] | **Yes** |
| Second Result | [0, 1, 0] | No |
| Third Result | [0, 0, 1] | No |

| Second Search Instance | Result | User Click? |
|---|---|---|
| First Result | [0, 1, 1] | **Yes** |
| Second Result | [1, 0, 0] | No |

| Third Search Instance | Result | User Click |
|---|---|---|
| First Result | [0, 1, 0] | No |
| Second Result | [1, 0, 1] | **Yes** |

Assuming the initial order of the features are 2, 1, 3, ( O = {f2,f1,f3} in the above algorithm), the system can try to set the weight for feature 2 as 1.0, and the rest of weight as 0.0. Accordingly, based on the weight vector as [0, 1.0 , 0], the above results has the following rankings:

| First Search Instance Rankings | Score |
|---|---|
| Second Result | 1.0 |
| **First Result (User click)** | **0.0** |
| Third Results | 0.0 |

| Second Search Instance Rankings | Score |
|---|---|
| **First Result (User click)** | **1.0** |
| Second Result | 0.0 |

| Third Search Instance Rankings | Score |
|---|---|
| First Result | 1.0 |
| **Second Result (User click)** | **0.0** |

The MRR based on the weight vector as [0, 1.0, 0] is 1/2 + 1/1 + 1/2 = 2. The MRR is calculated based on the First Result (the result being clicked by the user) being ranked second in the first search instance, giving it an MRR value of 1/2. The First Result (the result being clicked by the user) is ranked first in the second search instance, giving it an MRR value of 1/1. The Second Result (the result being clicked by the user) is ranked second in the third search instance, giving it an MRR value of 1/2.

In this example, the MRR is less than the Optimal_MRR of 3.0, therefore the search module 206 continues to modify the weight factors of the search features (f1, f2, f3) until the MRR is equal to 3.0

The system can change the weight vector in order to optimize the MRR. In another iteration, the system can try to search using a different weight factor by increasing the factor for feature 1. In this instance, the system can try to increase feature 1 by 1.0, which results in weight vector as [1.0, 1.0, 0.0]. The following result are based on the [1.0, 1.0, 0.0] weight factor. Additionally, the result identity (ID) can be used as the tie-breaker.

| First Search Instance Rankings | Score |
|---|---|
| **First Result (User Clicked)** | **1.0** |
| Second Result | 1.0 |
| Third Results | 0.0 |

| Second Search Instance Rankings | Score |
|---|---|
| **First Result (User Clicked)** | **1.0** |
| Second Result | 1.0 |

| Third Search Instance Rankings | Score |
|---|---|
| First Result | 1.0 |
| **Second Result (User click)** | **1.0** |

Therefore, the MRR is 1 + 1 + ½ = 2.5, when using the [1.0, 1.0, 0.0] weight factor.

In another iteration, the system once again increase feature 1 by 1.0, which results in a [2.0, 1.0, 0.0] weight factor. The following search results are based on the [2.0, 1.0, 0.0] weight factor.

| First Search Instance Rankings | Score |
|---|---|
| **First Result (User Clicked)** | **2.0** |
| Second Result | 1.0 |
| Third Results | 0.0 |

| Second Search Instance Rankings | Score |
|---|---|
| Second Result | 2.0 |
| **First Result (User Clicked)** | **1.0** |

| Third Search Instance Rankings | Score |
|---|---|
| **Second Result (User click)** | **2.0** |
| First Result | 1.0 |

In this instance, the MRR is still 2.5 when using the [2.0, 1.0, 0.0] weight factor. Therefore, the system will try W[1] = W[1] - 1.0 instead, and try to increase the weight of feature 1 by 0.5, (step 5), which results in the [1.5, 1.0, 0] weight factor. The following search results are based on the [1.5, 1.0, 0] weight factor.

| Third Search Instance Rankings | Score |
|---|---|
| **First Result (User Clicked)** | **1.5** |
| Second Result | 1.0 |
| Third Results | 0.0 |

| Third Search Instance Rankings | Score |
|---|---|
| Second Result | **1.5** |
| **First Result (User Clicked)** | 1.0 |

| Third Search Instance Rankings | Score |
|---|---|
| **Second Result (User click)** | **1.5** |
| First Result | 1.0 |

In this instance, the MRR is still 2.5, therefore in the next iteration, the system will use W[1] = W[1] - 0.5 in step 4, and try W[1] = W[1] +0.25. The same process continues, until j == 8 in step 5, then the process tries to determine the weight factor for the next feature, which is feature 3.

Therefore, the system sets feature 3 to 1.0, which results in the weight vector being [1.0, 1.0, 1.0]. Based on the weight vector being [1.0, 1.0, 1.0], the following search results occur.

| Third Search Instance Rankings | Score |
|---|---|
| **First Result (User Clicked)** | **1.0** |
| Second Result | 1.0 |
| Third Results | 1.0 |

| Third Search Instance Rankings | Score |
|---|---|
| **First Result (User Clicked)** | **1.0** |
| Second Result | 1.0 |

| Third Search Instance Rankings | Score |
|---|---|
| **Second Result (User click)** | **2.0** |
| First Result | 1.0 |

In this instance, by using [1.0, 1.0, 1.0] as the weight factor, the MRR is 1/1 +1/1 +1/1 = 3.0, which is equal to the Optimal_MRR. In some other embodiments, Optimal_MRR can be a threshold that is close to the actual optimal MRR (e.g., 90% value of the optimal MRR). For example, in this example, the Optimal_MRR can be any value that is greater than 2.7.

Alternatively, if the optimum solution is not found, the process continues by reordering the features by their weight factor, which in this case would be feature 1, feature 2, and feature 3. After the reordering, the process at operation 370 is repeated. As previously mentioned, the weight of a feature corresponds to the importance of the feature.

Furthermore, in some instances, the incremental change of the weight assignment can be smaller in order to get better results. For example, according to another embodiment, the incremental array T originally as {1.0, 0.5, 0.25, 0.125, 0.0625, 0.03125, 0.015625, 0.015625} can be changed to an updated array T such as {1, 1/2, $1/2^2$ , $1/2^3$, $1/2^4$ , $1/2^5$, $1/2^6$, $1/2^7$, ..., $1/2^n$ , $-1/2^k$ $-1/2^{k+1}$, ..., $-1/2^n$}. However, the computational requirements may increase using the updated array T. According to yet another embodiment, array T can start with a small negative weight start, such as $-1/2^k$, instead of 1.0.

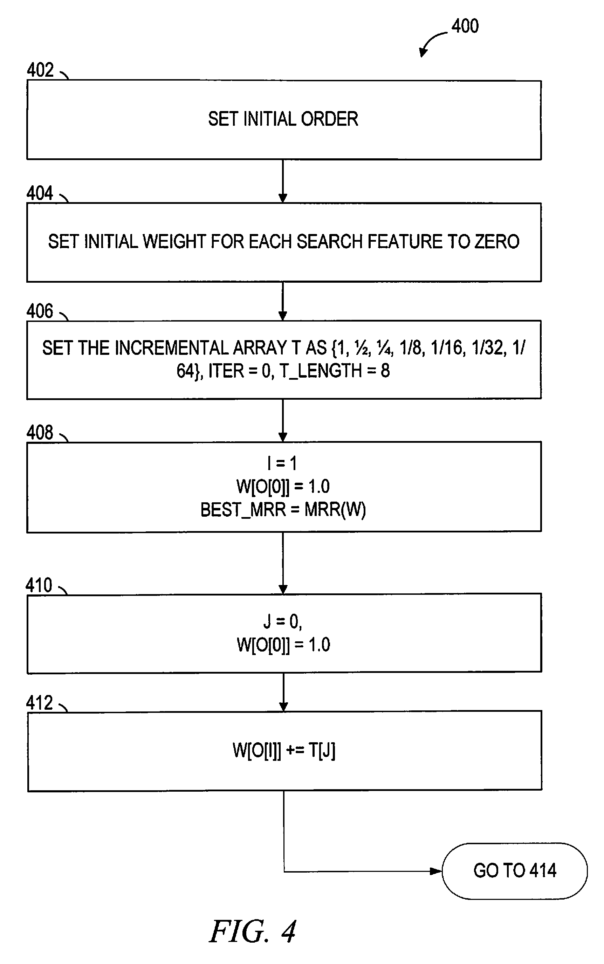

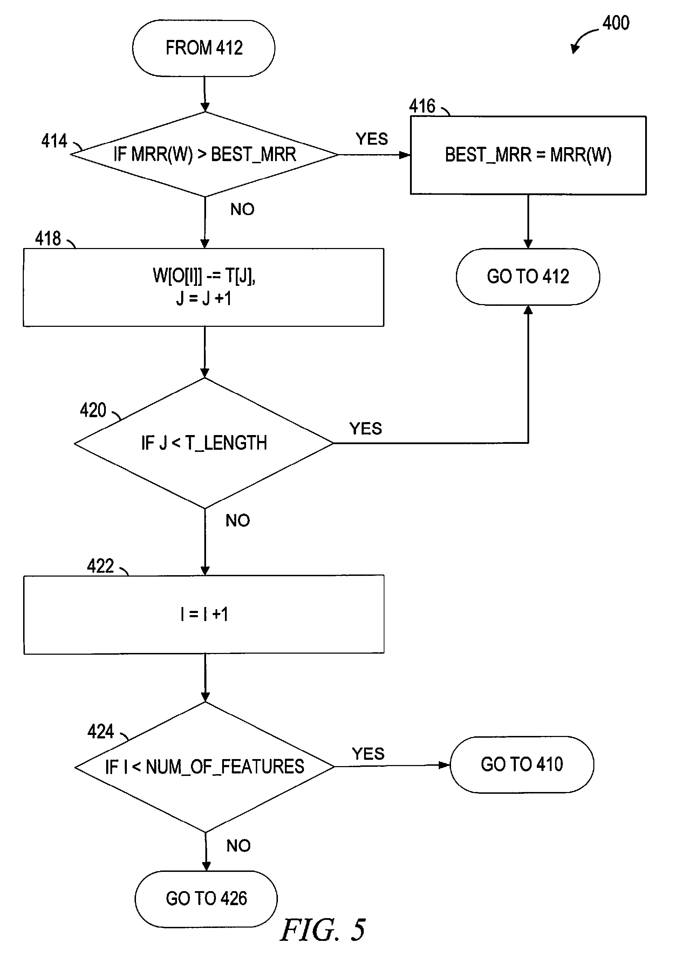

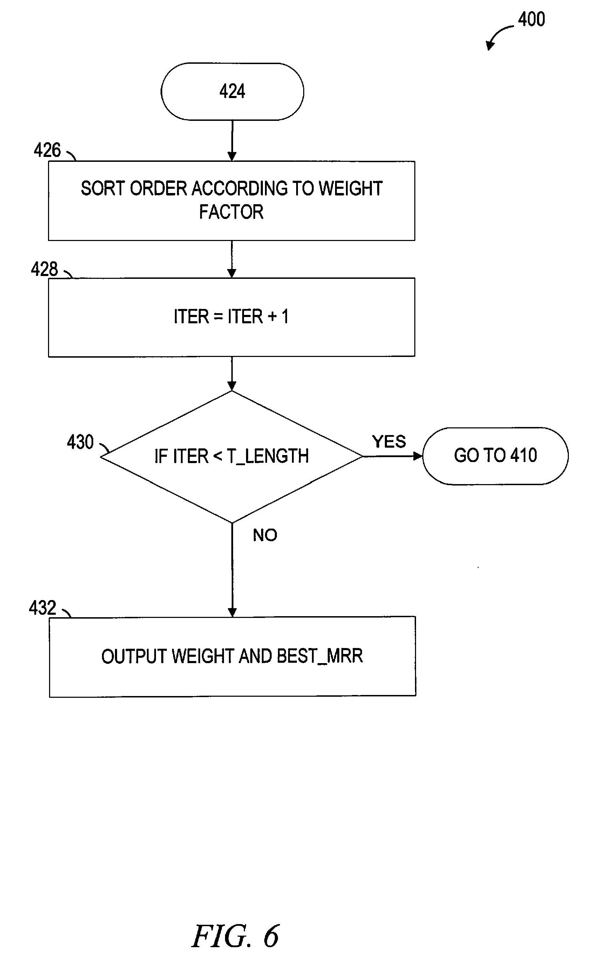

Now referring to FIGS. 4-6, method 400 illustrates a technique for optimizing a non-convex function for learning to rank, according to another embodiment of the present invention. For example, method 400 illustrates a specific example for implementing method 300, according to one embodiment of the present invention.

As illustrated in FIGS. 4-6, method 400 may include one or more of operations 402, 404, 406, 408, 410, 412, 414, 416, 418, 420, 422, 424, 426, 428, 430, and 432. Operations in method 400 may be performed by social network system 210 using search features 218 as described above with respect to FIG. 2.

Method 400 described a detailed algorithm based on the three assumptions discussed with FIG. 3.

At operation 402, search module 206 set an initial order (O). O can be the order for the search features based on human evaluation on strength or strength derived from data. For example, search module 206 can be initially given O by a user.

At operation 404, search module 206 can set an initial weight for all the features to 0.

At operation 406, search module 206 can set the incremental array T as {1, ½, ¼, 1/8, 1/16, 1/32, 1/64}. Additionally iter can be equal to zero, and T_Length is equal to eight (i.e., the number of increments in array T).

At operation 408, search module 206 sets i = 1 and W[O[0]] = 1.0. For example, search module 206 assigns the first search feature a weight factor of 1.0. Additionally, best_MRR is initially set to equal the MRR with the first search feature having a weight factor of 1.0 and the rest of the search features having a weight factor of zero.

At operation 410, search module 206 sets j = 0 and W[O[0]] = 1.0.

At operation 412, search module 206 continues the process with W[O[i]] += T[j].

At operation 414, if MRR(W) is greater than Best_MRR then Best_MRR is updated by search module 206 to equal to MRR(W) at operation 416, and the process goes back to operation 412.

Alternatively if MRR(W) is not greater than Best_MRR, then the process continues to operation 418. At operation 418, search module 206 continues the process with W[O[i]] -= T[j]; j = j +1.

At operation 420, if j is less than T_Length (equal to 8 in this example), then the process goes back to operation 412. Alternatively, if j is not less than T_Length then the process continues to operation 422.

At operation 422, search module 206 increments i by 1.

At operation 424, if i is less than Num_Of_Features (equal to the total number of search features 218), then the process goes back to operation 410. Alternatively, if i is not less than Num_Of_Features, then the process continues to operation 426.

At operation 426, search module 206 sorts O (order) according to the weight factor of the search features 218.

Then at operation 428, search module 206 increments iter by 1.

At operation 430, if iter is less than T_Length (i.e., T_Length = 8), then the process goes back to operation 410.

Alternatively, if iter is not less than T_Length, then at operation 250, search module 206 can output W (weight factor) and Best_MRR.

For example, method 400 can be implemented using the following heuristic algorithm:

- step 0: set an initial O (order for the features based on human evaluation on strength or strength derive from data), set W (weight) of all features to 0, set the incremental array T as {1.0, 0.5, 0.25, 0.125, 0.0625, 0.03125, 0.015625, -0.015625}, iter = 0;

- step 1: i = 1,W[O[0]] = 1.0, best_MRR= MRR(W);

- step 2: j = 0;

- step 3: W[O[i]] += T[j];

- step 4: if (MRR(W) > Best_MRR) Best_MRR = MRR(W); goto step 3;

- step 5: W[O[i]] - = T[j]; j = j +1; if (j < 8) goto step 3; // 8 is the size of the incremental array T;

- step 6: i = i +1; if i < Num_Of_Features goto step 2;

- step 7: sort O (order) according to W;

- step 8: iter = iter +1; if iter < 8 goto step 2; and // 8 is the number of iterations, could be set to a different number

- step 9: output W and Best_MRR.

According to various example embodiments, one or more of the methodologies described herein may facilitate optimizing non-convex functions for learning to rank. Moreover, one or more of the methodologies described herein may facilitate presenting the correct user in a name search result.

Furthermore, as previously mentioned, techniques described herein can outperform current implementations of name search models that are based on logistic regression. For example, when about 50 weight factors are calculated, techniques described herein are about eight times faster than current implementations of coordinate descent techniques. Coordinate descent algorithms have functions based on $O(n^2)$, while techniques described herein can have algorithms with functions based $O(kn)$

When these effects are considered in aggregate, one or more of the methodologies described herein may obviate a need for certain efforts or resources that otherwise would be involved in optimizing non-convex functions for learning to rank. Computing resources used by one or more machines, databases, or devices (e.g., within the network environment 100) may similarly be reduced. Examples of such computing resources include processor cycles, network traffic, memory usage, data storage capacity, power consumption, and cooling capacity.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules or objects that operate to perform one or more operations or functions. The modules and objects referred to herein may, in some example embodiments, comprise processor-implemented modules and/or objects.

Similarly, the methods described herein may be at least partially processor-implemented. For example, at least some of the operations of a method may be performed by one or more processors or processor-implemented modules. The performance of certain operations may be distributed among the one or more processors, not only residing within a single machine or computer, but deployed across a number of machines or computers. In some example embodiments, the processor or processors may be located in a single location (e.g., within a home environment, an office environment or at a server farm), while in other embodiments the processors may be distributed across a number of locations.

The one or more processors may also operate to support performance of the relevant operations in a "cloud computing" environment or within the context of "software as a service" (SaaS). For example, at least some of the operations may be performed by a group of computers (as examples of machines including processors), these operations being accessible via a network (e.g., the Internet) and via one or more appropriate interfaces (e.g., Application Program Interfaces (APIs)).

FIG. 7 is a block diagram illustrating components of a machine 700, according to some example embodiments, able to read instructions 724 from a machine-readable medium 722 (e.g., a non-transitory machine-readable medium, a machine-readable storage medium, a computer-readable storage medium, or any suitable combination thereof) and perform any one or more of the methodologies discussed herein, in whole or in part. Specifically, FIG. 7 shows the machine 700 in the example form of a computer system (e.g., a computer) within which the instructions 724 (e.g., software, a program, an application, an applet, an app, or other executable code) for causing the machine 700 to perform any one or more of the methodologies discussed herein may be executed, in whole or in part.

In alternative embodiments, the machine 700 operates as a standalone device or may be connected (e.g., networked) to other machines. In a networked deployment, the machine 700 may operate in the capacity of a server machine or a client machine in a server-client network environment, or as a peer machine in a distributed (e.g., peer-to-peer) network environment. The machine 700 may be a server computer, a client computer, a personal computer (PC), a tablet computer, a laptop computer, a netbook, a cellular telephone, a smartphone, a set-top box (STB), a personal digital assistant (PDA), a web appliance, a network router, a network switch, a network bridge, or any machine capable of executing the instructions 724, sequentially or otherwise, that specify actions to be taken by that machine. Further, while only a single machine is illustrated, the term "machine" shall also be taken to include any collection of machines that individually or jointly execute the instructions 724 to perform all or part of any one or more of the methodologies discussed herein.

The machine 700 includes a processor 702 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 704, and a static memory 706, which are configured to communicate with each other via a bus 708. The processor 702 may contain microcircuits that are configurable, temporarily or permanently, by some or all of the instructions 724 such that the processor 702 is configurable to perform any one or more of the methodologies described herein, in whole or in part. For example, a set of one or more microcircuits of the processor 702 may be configurable to execute one or more modules (e.g., software modules) described herein.

The machine 700 may further include a graphics display 710 (e.g., a plasma display panel (PDP), a light emitting diode (LED) display, a liquid crystal display (LCD), a projector, a cathode ray tube (CRT), or any other display capable of displaying graphics or video). The machine 700 may also include an alphanumeric input device 712 (e.g., a keyboard or keypad), a cursor control device 714 (e.g., a mouse, a touchpad, a trackball, a joystick, a motion sensor, an eye tracking device, or other pointing instrument), a storage unit 716, an audio generation device 718 (e.g., a sound card, an amplifier, a speaker, a headphone jack, or any suitable combination thereof), and a network interface device 720.

The storage unit 716 includes the machine-readable medium 722 (e.g., a tangible and non-transitory machine-readable storage medium) on which are stored the instructions 724 embodying any one or more of the methodologies or functions described herein. The instructions 724 may also reside, completely or at least partially, within the main memory 704, within the processor 702 (e.g., within the processor's cache memory), or both, before or during execution thereof by the machine 700. Accordingly, the main memory 704 and the processor 702 may be considered machine-readable media (e.g., tangible and non-transitory machine-readable media). The instructions 724 may be transmitted or received over the network 190 via the network interface device 720. For example, the network interface device 720 may communicate the instructions 724 using any one or more transfer protocols (e.g., HTTP).

In some example embodiments, the machine 700 may be a portable computing device, such as a smart phone or tablet computer, and have one or more additional input components 730 (e.g., sensors or gauges). Examples of such input components 730 include an image input component (e.g., one or more cameras), an audio input component (e.g., a microphone), a direction input component (e.g., a compass), a location input component (e.g., a global positioning system (GPS) receiver), an orientation component (e.g., a gyroscope), a motion detection component (e.g., one or more accelerometers), an altitude detection component (e.g., an altimeter), and a gas detection component (e.g., a gas sensor). Inputs harvested by any one or more of these input components may be accessible and available for use by any of the modules described herein.

As used herein, the term "memory" refers to a machine-readable medium able to store data temporarily or permanently and may be taken to include, but not be limited to, random-access memory (RAM), read-only memory (ROM), a signal, buffer memory, flash memory, and cache memory. While the machine-readable medium 722 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing the instructions 724 for execution by the machine 700, such that the instructions 724, when executed by one or more processors of the machine 700 (e.g., processor 702), cause the machine 700 to perform any one or more of the methodologies described herein, in whole or in part. Accordingly, a "machine-readable medium" refers to a single storage apparatus or device, as well as cloud-based storage systems or storage networks that include multiple storage apparatus or devices. The term "machine-readable medium" shall accordingly be taken to include, but not be limited to, one or more tangible (e.g., non-transitory) data repositories in the form of a solid-state memory, an optical medium, a magnetic medium, or any suitable combination thereof.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute software modules (e.g., code stored or otherwise embodied on a machine-readable medium or in a transmission medium), hardware modules, or any suitable combination thereof. A "hardware module" is a tangible (e.g., non-transitory) unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, and such a tangible entity may be physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software (e.g., a software module) may accordingly configure one or more processors, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. As used herein, "processor-implemented module" refers to a hardware module in which the hardware includes one or more processors. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

**Claims**

1. A computer implemented method comprising:

    at a processor-implemented searching module, setting an order for a group of search features, the group of search features being used by a ranking model to determine a relevance of items in a search query;
    assigning a first weight factor to a first search feature in the group of search features;
    calculating a mean reciprocal rank for the search query based on the assigned first weight factor;
    determining, using a preset incremental vector, a second weight factor for a second search feature in the group of search features to maximize the mean reciprocal rank for the search query; and
    assigning the second weight factor to the second search feature in the group of search features.

2. The method of claim 1, further comprising:

    calculating the mean reciprocal rank for the search query based on weight factors assigned to each search feature in the group of search features;
    upon a condition in which the mean reciprocal rank is less than an optimal mean reciprocal rank:

        determining, using the preset incremental vector, a subsequent weight factor for a subsequent search feature in the group of search features to maximize the mean reciprocal rank for the search query;
        assigning the subsequent weight factor to the subsequent search feature in the group of search features; and
        repeating the calculating and the conditional performing until the mean reciprocal rank is equal to an optimal mean reciprocal rank.

3. The method of claim 1 or claim 2, further comprising:

updating the order for the group of search features based on the weight factors assigned to each search feature in the group of search features.

4. The method of claim 3, wherein the update occurs either after a weight factor has been assigned for each search feature in the group of search features, or after the mean reciprocal rank is equal than the optimal mean reciprocal rank.

5. The method of claim 4, further comprising:

   repeating the determining of a weight factor for each search feature in the group of search features based on the updated order.

6. The method of any preceding claim, further comprising:

   determining, using the preset incremental vector, a third weight factor for a third search feature in the group of search features to maximize the mean reciprocal rank for the search query; and
   updating the order for the group of search features based on the weight factors assigned to each search feature in the group of search features.

7. The method of any preceding claim, wherein: the optimal mean reciprocal rank is a threshold value corresponding to the relevance of items in a search query; or
   the order for the group of search features is set based on a pre-determined strength for each search of the search features.

8. The method of any preceding claim, wherein the determination of the second weight factor for the second search feature further comprises:

   selecting a weight factor from a list of weight factors in the incremental array vector, wherein the incremental array vector is used to change the second weight factor of the second search feature incrementally until the mean reciprocal rank for the search query is maximized.

9. The method of claim 8, wherein the selection of the weight factor further comprises:

   increasing a current weight factor associated with the second search feature by an increment from the incremental array vector;
   calculating a current mean reciprocal rank for the search query based on the increased current weight factor;
   selecting the increased current weight factor as the second weight factor when the current mean reciprocal rank is greater than the best mean reciprocal rank; and
   repeating the increasing, calculating and selecting until the current mean reciprocal rank is greater than the best mean reciprocal rank.

10. The method of any preceding claim, wherein one of more of the search features in the group of search features is based on a social graph maintained by a social network service.

11. The method of claim 10, wherein the social graph includes a company associated with a searcher requesting the search query.

12. The method of any one of claims 1 to 9, wherein: one of more of the search features in the group of search features is based on member profile attributes associated with a social network service; or
   one of more of the search features in the group of search features are based on subscription of a user to receive messages published on behalf of an entity; or
   one of more of the search features in the group of search features is a member profile attribute that specifies an industry associated with a searcher requesting the search query.

13. The method of any one of claims 1 to 9, wherein: one of more of the search features in the group of search features is a member profile attribute that specifies a job title associated with a searcher requesting the search query; or
   one of more of the search features in the group of search features is a geographical location associated with a searcher requesting the search query.

**14.** The method of any one of claims 1 to 9, wherein one of more of the search features in the group of search features is a job seeker status indicating whether a searcher requesting the search query is seeking a new job.

**15.** A machine-readable medium carrying instructions that, when executed by one or more processors of a machine, cause the machine to carry out the method of any one of claims 1 to 14.

100

105

NETWORK-BASED SYSTEM

110

SERVER
MACHINE

115

DATABASE

190 NETWORK

130 DEVICE

132

150 DEVICE

152

*FIG. 1*

USER INTERFACE (e.g., WEB SERVER) MODULE(S)

202

APPLICATION SERVER MODULE(S)

204

SEARCH MODULE(S)

206

SEARCH ALGORITHM(S)
208

SOCIAL NETWORK SYSTEM 210

PROFILE DATA (e.g., MEMBER, COMPANY, SCHOOL

212

SOCIAL GRAPH DATA

214

MEMBER ACTIVITY AND BEHAVIOR DATA

216

SEARCH FEATURES 218

*FIG. 2*

300

310
SET AN ORDER FOR THE SEARCH FEATURES BASED ON ASSUMED STRENGTH OF THE SEARCH FEATURES

320
SET INITIAL WEIGHT FOR EACH SEARCH FEATURE TO ZERO

330
ASSIGN A FIRST WEIGHT FACTOR TO THE FIRST SEARCH FEATURE

340
CALCULATE A BEST_MRR FOR SEARCH QUERY

350
IS THE BEST_MRR LESS THAN OPTIMAL_MRR?    NO

YES

360
ANY MORE SEARCH FEATURES TO ASSIGN A WEIGHT FACTOR FOR?    NO

YES

370
DETERMINE A WEIGHT FACTOR FOR THE ADDITIONAL SEARCH FEATURE IN ORDER TO MAXIMIZE BEST_MRR

380
UPDATE THE ORDER FOR THE SEARCH FEATURES BASED ON THE WEIGHT FACTOR ASSIGNED TO EACH SEARCH FEATURE

*FIG. 3*

400

402

SET INITIAL ORDER

404

SET INITIAL WEIGHT FOR EACH SEARCH FEATURE TO ZERO

406

SET THE INCREMENTAL ARRAY T AS {1, ½, ¼, 1/8, 1/16, 1/32, 1/64}, ITER = 0, T_LENGTH = 8

408

I = 1
W[O[0]] = 1.0
BEST_MRR = MRR(W)

410

J = 0,
W[O[0]] = 1.0

412

W[O[I]] += T[J]

GO TO 414

*FIG. 4*

400

FROM 412

414 — IF MRR(W) > BEST_MRR — YES → 416 — BEST_MRR = MRR(W)

NO

418 — W[O[I]] -= T[J], J = J +1

BEST_MRR = MRR(W) → GO TO 412

420 — IF J < T_LENGTH — YES → GO TO 412

NO

422 — I = I +1

424 — IF I < NUM_OF_FEATURES — YES → GO TO 410

NO

GO TO 426

*FIG. 5*

400

```
        ┌──────────────┐
        │     424      │
        └──────┬───────┘
               │
               ▼
```

426

┌─────────────────────────────────────┐
│  SORT ORDER ACCORDING TO WEIGHT      │
│              FACTOR                   │
└─────────────────────────────────────┘

428

┌─────────────────────────────────────┐
│           ITER = ITER + 1            │
└─────────────────────────────────────┘

430

IF ITER < T_LENGTH — YES → GO TO 410

NO

432

┌─────────────────────────────────────┐
│      OUTPUT WEIGHT AND BEST_MRR      │
└─────────────────────────────────────┘

*FIG. 6*

700

PROCESSOR
702
724 INSTRUCTIONS

MAIN MEMORY
704
724 INSTRUCTIONS

STATIC MEMORY
706

708

NETWORK INTERFACE DEVICE
720

190 NETWORK

INPUT COMPONENTS
730
IMAGE
AUDIO
DIRECTION
LOCATION
ORIENTATION
MOTION
ALTITUDE
GAS

BUS

GRAPHICS DISPLAY — 710

ALPHANUMERIC INPUT DEVICE — 712

CURSOR CONTROL DEVICE — 714

STORAGE UNIT — 716
MACHINE-READABLE MEDIUM — 722
INSTRUCTIONS — 724

AUDIO GENERATION DEVICE — 718

*FIG. 7*

Europäisches
Patentamt

European
Patent Office

Office européen
des brevets

# EUROPEAN SEARCH REPORT

Application Number

EP 15 15 9110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/265290 A1 (CIARAMITA MASSIMILIANO [ES] ET AL) 22 October 2009 (2009-10-22)<br>* figures 1,2,3 *<br>* paragraph [0028] - paragraph [0042] *<br>* paragraph [0014] *<br>----- | 1-15 | INV.<br>G06F17/30 |

TECHNICAL FIELDS
SEARCHED    (IPC)

G06F

The present search report has been drawn up for all claims

| Place of search | Date of completion of the search | Examiner |
|---|---|---|
| Munich | 8 October 2015 | Michalski, Stéphane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................
& : member of the same patent family, corresponding
document

EPO FORM 1503 03.82 (P04C01)

EP 2 950 226 A1

ANNEX TO THE EUROPEAN SEARCH REPORT
ON EUROPEAN PATENT APPLICATION NO.

EP 15 15 9110

This annex lists the patent family members relating to the patent documents cited in  the above-mentioned European search report.
The members are as contained in the European Patent Office EDP file on
The European Patent Office is in no way liable for these particulars which are merely given for the purpose of information.

08-10-2015

| Patent document cited in search report | Publication date | Patent family member(s) | Publication date |
|---|---|---|---|
| US 2009265290 A1 | 22-10-2009 | NONE | |

EPO FORM P0459

For more details about this annex : see Official Journal of the European Patent Office, No. 12/82